# EUROPÄISCHE PATENTSCHRIFT

(11) **EP 2 354 567 B1**
(45) Veröffentlichungstag und Bekanntmachung des Hinweises auf die Patenterteilung: **01.05.2013**
(21) Anmeldenummer: 10000437.3
(22) Anmeldetag: 18.01.2010
(51) Int. Cl.: F16B 13/14, F16B 25/00, F16B 33/02, F16B 13/02

(54) **Verbundankerschraube**
Connecting anchor screw
Vis de tige d'encrage

(43) Veröffentlichungstag der Anmeldung: 10.08.2011
(73) Patentinhaber: UIP GmbH & Co. KG, 63814 Mainaschaff (DE)
(72) Erfinder: Göttlich, Harald, 30900 Wedemark (DE)
(74) Vertreter: Thürer, Andreas

(56) Entgegenhaltungen:
- EP-A1- 2 098 736
- EP-A2- 0 955 476
- EP-A2- 1 892 425

## Beschreibung

Um Verbundankerschrauben in einem Verankerungsgrund zu verankern, ist es bekannt, zunächst ein Loch mittels einer Bohrmaschine in den Verankerungsgrund zu bohren. Anschließend wird das gebohrte Loch gereinigt und mit einer aushärtbaren Masse, beispielsweise einem Mörtel oder einem Klebstoff versehen. Die aushärtbare Masse wird üblicherweise mittels einer Kartuschenpistole vom Bohrlochgrund her injiziert. Anschließend wird die so genannte Verbundankerschraube in das Bohrloch geschraubt.

Eine solche Befestigungsanordnung bzw. ein solches System aus Verbundankerschraube und Klebstoff ist beispielsweise aus der EP 0 955 476 B1 oder der EP 2 098 736 A1 bekannt.

Ausgehend von diesem Stand der Technik liegt der Erfindung die Aufgabe zugrunde, eine verbesserte Verbundankerschraube nach dem Oberbegriff des Anspruchs 1 bereitzustellen.

Diese Aufgabe wird durch eine Verbundankerschraube nach dem Oberbegriff des Anspruchs 1 dadurch gelöst, dass diese zwei oder mehr, vorzugsweise drei Gewindebänder aus jeweils zwei oder mehr, vorzugsweise zwei Gewindegängen aufweist, die parallel zueinander ausgebildet sind und sich helixförmig zumindest teilweise über die Länge des Schaftes erstrecken.

Eine solche Schraube eignet sich besonders gut, um stoffschlüssig durch Klebstoff als auch kraft- bzw. formschlüssig durch die erfindungsgemäße Ausbildung der Verbundankerschraube im Verankerungsgrund verankert zu werden. Die wenigstens zwei, vorzugsweise drei Gewindebänder bilden im eingeschraubten Zustand der Verbundankerschraube in einem Bohrloch quasi zahlreiche Kammern zwischen Verbundankerschraube und Bohrlochwandung aus. Diese quasi freien Räume sind im Einsatzfall mit aushärtbarer Masse gefüllt. Bekannte für diesen Einsatzfall verwendbare, aushärtbare Massen schrumpfen. Dadurch, dass sich die aushärtbare Masse jedoch in den vorgenannten Kammern befindet, hat das Schrumpfen der aushärtbaren Masse einen geringeren negativen Einfluss auf das Tragverhalten der erfindungsgemäßen Verbundankerschraube als dies bei den bekannten Verbundankerschrauben der Fall ist.

Zusätzlich erhöhen die in einer Querschnittsebene der Verbundankerschraube befindlichen und in die Bohrlochwandung einschneidenden Gewindegänge die im Verankerungsgrund wirksame Fläche, die sich direkt proportional zum Tragverhalten der Verbundankerschraube verhält. Die in einer Querschnittsebene der Verbundankerschraube befindlichen und in die Bohrlochwandung einschneidenden Gewindegänge beeinflussen das Tragverhalten der Verbundankerschraube mithin positiv.

Es hat sich gezeigt, dass eine solche Verbundankerschraube im Einsatzfall alle mechanischen Toleranzen eliminiert. Es wird eine optimale Kompensation dynamischer Lasten erreicht. Die erfindungsgemäße Verbundankerschraube vergrößert im Einsatzfall bei dynamischen Lasten weder seine Spiel noch seine Toleranz. Dies macht die Verbundankerschraube insgesamt zu einem erdbebensicheren Schwerlastanker.

Es kann von Vorteil sein, wenn jedes Gewindeband die gleiche Anzahl von Gewindegängen aufweist.

Es kann für bestimmte Anwendungsfälle zweckmäßig sein, wenn die Gewindegänge eines Gewindebandes einen unterschiedlich großen Außendurchmesser haben. Es kann für andere bestimmte Anwendungsfälle zweckmäßig sein, wenn die Gewindegänge mehrerer Gewindebänder einen unterschiedlich großen Außendurchmesser haben, Es kann für gewisse Anwendungsfälle zweckmäßig sein, wenn die Gewindegänge eines Gewindebandes einen gleich großen Außendurchmesser aufweisen, Es kann für andere gewisse Anwendungsfälle zweckmäßig sein, wenn die Gewindegänge mehrerer oder vorzugsweise aller Gewindebänder einen gleich großen Außendurchmesser aufweisen.

Der Außendurchmesser eines Gewindeganges wird über den Gewindegrat gemessen. Jeder Gewindegang weist einen gleich bleibenden Außendurchmesser über die Länge des Schaftes auf. Vorzugsweise ist jeder Gewindegang als Spitzgewinde mit abgeflachter Spitze ausgebildet.

Es kann für bestimmte Einsatzzwecke zweckmäßig sein, wenn die Gewindegänge eines Gewindebandes einen unterschiedlich großen Flankenwinkel haben. Es kann für andere bestimmte Einsatzzwecke zweckmäßig sein, wenn die Gewindegänge mehrerer Gewindebänder einen unterschiedlich großen Flankenwinkel haben. Es kann für gewisse Einsatzzwecke zweckmäßig sein, wenn die Gewindegänge eines Gewindebandes einen gleich großen Flankenwinkel aufweisen. Es kann für andere gewisse Einsatzzwecke zweckmäßig sein, wenn die Gewindegänge mehrerer oder vorzugsweise aller Gewindebänder einen gleich großen Flankenwinkel aufweisen.

Es kann vorteilhaft sein, wenn die Gewindebänder die gleiche Steigung aufweisen.

Es kann zweckmäßig sein, wenn die Gewindebänder gleichmäßig voneinander beabstandet an einer gemeinsamen Umfangslinie des Schaftes starten.

Dadurch wird im Einsatzfall der Verbundankerschraube ein gewindefreier Bereich zwischen Schaft und Bohrlochwandung im Verankerungsgrund geschaffen, welcher eine optimale Adhäsion zwischen aushärtbarer Masse und Schraube sowie zwischen aushärtbarer Masse und Bohrlochwandung sicherstellt.

Eine Weiterbildung der Erfindung sieht vor, dass die Gewindegänge jedes Gewindebandes den gleichen Abstand zueinander haben.

Eine vorteilhafte Ausgestaltung der Erfindung sieht vor, dass die Außendurchmesser der Gewindegänge derart bemessen sind, dass sich diese beim Einschrauben zumindest teilweise in die Wandung der Bohrung eingraben und furchen.

Es kann vorteilhaft sein, wenn sich wenigstens 1/6 und höchstens 5/6 der Höhe eines Gewindeganges, gemessen im rechten Winkel ausgehend von der Oberfläche des Schaftes bis zum Grat des betreffenden Gewindeganges, in die Wandung der Bohrung eingraben und furchen.

Dadurch wird im Einsatzfall der Verbundankerschraube ein gewindefreier Bereich zwischen Schaft und Bohrlochwandung im Verankerungsgrund geschaffen, welcher eine optimale Adhäsion zwischen aushärtbarer Masse und Schraube sowie zwischen aushärtbarer Masse und Bohrlochwandung sicherstellt.

Es kann aber auch vorteilhaft sein, wenn sich wenigstens die Spitzen der Gewindegänge in die Wandung der Bohrung eingraben und furchen.

Dadurch wird im Einsatzfall der Verbundankerschraube ein gewindefreier Bereich zwischen Schaft und Bohrlochwandung im Verankerungsgrund geschaffen, welcher eine optimale Adhäsion zwischen aushärtbarer Masse und Schraube sowie zwischen aushärtbarer Masse und Bohrlochwandung sicherstellt.

Es kann zweckmäßig sein, wenn sich die Gewindegänge vollständig in die Wandung der Bohrung eingraben und furchen.

Dadurch wird im Einsatzfall der Verbundankerschraube ein gewindefreier Bereich zwischen Schaft und Bohrlochwandung im Verankerungsgrund geschaffen, welcher eine optimale Adhäsion zwischen aushärtbarer Masse und Schraube sowie zwischen aushärtbarer Masse und Bohrlochwandung sicherstellt.

Ein Weiterbildung sieht vor, dass zwischen wenigstens zwei, vorzugsweise jeweils zwischen allen Gewindebändern wenigstens eine Einkerbung im Schaft vorgesehen ist, die sich vorzugsweise parallel zu den Gewindebändern, unterbrochen oder vorzugsweise ununterbrochen, besonders bevorzugt helixförmig und ganz besonders bevorzugt zumindest teilweise über die Länge des Schaftes erstreckt.

Dadurch wird im Einsatzfall der Verbundankerschraube erreicht, dass die Bindung zwischen Verbundankerschraube und Bohrlochwandung im Verankerungsgrund erhöht wird, da die wenigstens eine Einkerbung quasi einen zusätzlichen Hinterschnitt zischen aushärtbarer Masse und Schaft der Verbundankerschraube bildet. Dadurch wird insgesamt das Tragverhalten der Verbundankerschraube weiter positiv beeinflusst.

Die Erfindung betriff auch eine Befestigungsanordnung in einem Verankerungsgrund, vorzugsweise aus Beton, mit einer gewindeformenden Verbundankerschraube nach einem der Ansprüche 1 bis 8, wobei die Verbundankerschraube in einem mit aushärtbarer Masse befüllten Bohrloch im Verankerungsgrund verankert ist, derart, dass ein Ringspalt zwischen Bohrlochwandung und der Verbundanker schraube mit der aushärtbaren Masse vollständig befüllt ist, wobei die Gewindebänder der Verbundankerschraube vorzugsweise vollständig im Verzukerungsgrund oder teilweise im Verankerungsgrund und teilweise in der aushärtbaren Masse eingebettet sind. Durch diese Kombination aus chemischer und mechanischer Fixierung wird eine höhere Feuerfestigkeit erreicht, eine kürzere Einbaulänge ermöglicht und insbesondere eine sofortige Belastung des Ankers gewährleistet, ohne dass die Aushärtungszeit der aushärtbaren Masse abgewartet werden muss. Das Kriechen des Klebstoffs wird deutlich verringert, da ein Großteil der Ankerlast von den Gewindebändern auf den Verankerungsgrund übertragen wird.

Durch die besondere Ausgestaltung der Verbundankerschraube wird erreicht, dass sich der Klebstoff weitgehend lunkerfrei, also ohne Lufteinschlüsse, im Zwischenraum zwischen Wandung der Bohrung und der Schraube verteilt. Hierfür ist der sich beim Einschrauben der Verbundankerschraube innerhalb der Bohrung einstellende hydropneumatische Druck verantwortlich, der insbesondere dazu führt, dass der Klebstoff beim weiteren Einschrauben entgegen der Setzrichtung in Richtung Bohrungsöffnung gedrückt wird, wobei sich der Klebstoff, insbesondere auch wegen der Ausgestaltung der Verbundankerschraube, gleichmäßig verteilt, und so eine sehr gute Flächenhaftung zwischen Wandung und Klebstoff einerseits und zwischen Schraube und Klebstoff andererseits gewährleistet wird.

Der Begriff "fester Verankerungsgrund" ist weit gefasst, Neben Beton, Natur- oder Kunststein, Fels, Mauerwerk oder dergleichen Werkstoff wird unter einem festen Verankerungsgrund beispielsweise auch ein bröckeliges Mauerwerksmaterial, weicher Ziegelstein oder ein anderer weicher Stein verstanden. Auch Holz kann einen festen Verankerungsgrund bilden. Bevorzugt ist Gasbeton als fester Verankerungsgrund.

Ein Weiterbildung der Erfindung sieht vor, dass die aushärtbare Masse Mörtel oder ein chemisch härtender Klebstoff, vorzugsweise ein Methylmethacrylat-Klebstoff, ein Polyester-Klebstoff oder besonders bevorzugt ein Epoxidharz-Klebstoff ist.

Es kann zweckmäßig sein, wenn der Abstand zwischen Bohrlochwandung und dem Kerndurchmesser des eingeschraubten Schaftes 0,1 bis 1 mm, vorzugsweise 0,3 bis 1 mm, besonders bevorzugt 0,7 bis 1 mm beträgt.

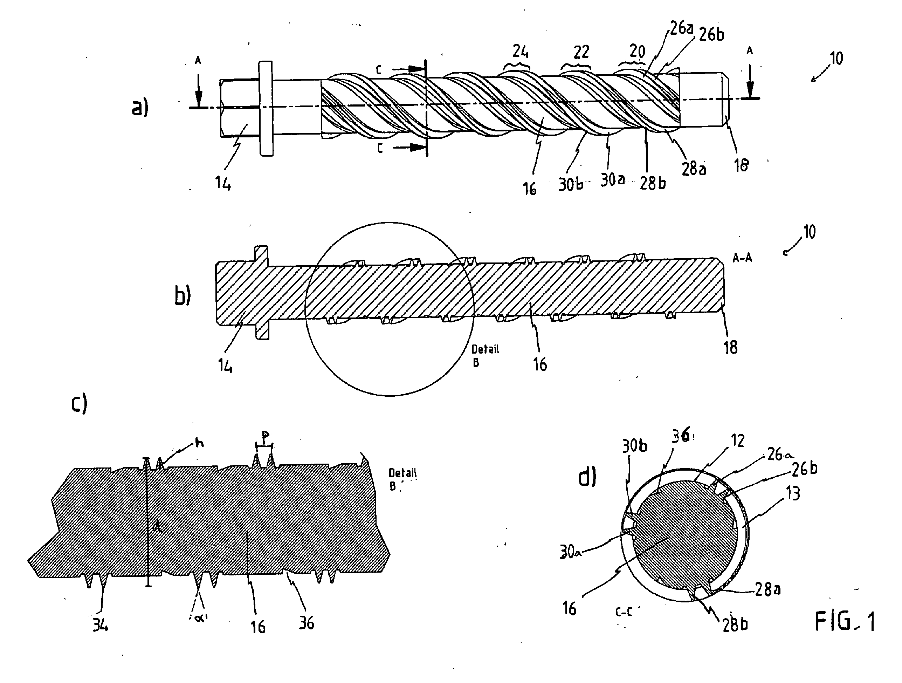

Nachfolgend wird die Erfindung anhand eines Ausführungsbeispiels erläutert, das in der Zeichnung dargestellt ist. In dieser zeigt
Fig. 1 eine erfindungsgemäße gewindeformende Verbundankerschraube
   a) in Seitenansicht
   b) in Längsschnittsansicht
   c) in Teilansicht (B) und
   d) in einer Querschnittsebene (C).

In der einzigen Figur bezeichnen gleiche Bezugszeichen gleiche Bauteile.

Die in Fig. 1 dargestellte Verbundankerschraube 10 weist eine kegelstumpfförmig leicht verjüngte Spitze 18 an einem vorderen Schraubenende und einen Schraubenkopf 14 an einem hinteren Schraubenende auf. Die kegelstumpfförmig verjüngte Spitze 18 erleichtert das Einführen der Verbundankerschraube 10 in die Bohrung 12 des Verankerungsgrundes 13. Im dargestellten Ausführungsbeispiel ist der Schraubenkopf 14 in einem beispielhaften Werkzeugangriff ausgebildet; diese Kopfform ist vorteilhaft, aber nicht zwingend.

Die Verbundankerschraube 10 weist drei Gewindebänder 20, 22, 24 auf mit jeweils zwei Gewindegängen 26a,b, 28a,b und 30a,b auf, die parallel zueinander angeordnet sind und sich helixförmig über die Länge des Schaftes 16 erstrecken.

Die Gewindegänge 26a,b, 28a,b und 30a,b weisen den gleichen Außendurchmesser d, gemessen über den Grat 34, und den gleichen Flankenwinkel α auf.

Der Abstand p zwischen den Gewindegängen 26a,b, 28a,b und 30a,b eines Gewindebandes 20, 22, 24 ist bei allen Gewindebändern 20, 22, 24 gleich groß.

Die Gewindebänder 20, 22, 24 sind gleichmäßig voneinander beabstandet.

Die Außendurchmesser d der Gewindegänge 26a,b, 28a,b und 30a,b sind jeweils größer als der Innendurchmesser der Bohrung 12, so dass sich beim Einschrauben der Verbundankerschraube 10 in die Bohrung 12 alle Gewindegänge 26a,b, 28a,b und 30a,b in die Wandung der Bohrung 12 einschneiden.

Es ist vorteilhaft, wenn sich wenigstens 1/6 und höchstens 5/6 der Höhe h eines Gewindeganges 26a,b, 28ab, 30a,b, gemessen im rechten Winkel ausgehend von der Oberfläche des Schaftes 16 bis zum Grat 34 des betreffenden Gewindeganges 26a,b, 28ab, 30a,b in die Wandung der Bohrung 12 eingraben und furchen.

Zwischen den Gewindebändern 20, 22, 24 ist vorteilhaft noch eine zusätzliche Einkerbung 36 im Schaft 16 vorgesehen, die sich parallel zu den Gewindebändern 20, 22, 24, ununterbrochen helixförmig und über die Länge des Schaftes 16 erstreckt.

Selbstverständlich ist die Erfindung nicht auf das Ausführungsbeispiel beschränkt, sondern im Rahmen der Ansprüche vielfach variabel.

### Bezugszeichenliste

- 10: Schraube
- 12: Bohrung
- 13: Verankerungsgrund
- 14: Schraubenkopf
- 16: Schaft
- 18: Spitze
- 20: Gewindeband
- 22: Gewindeband
- 24: Gewindeband
- 26a, 26b: 1. und 2. Gewindegang
- 28a, 28b: 3. und 4. Gewindegang
- 30a, 30b: 5. und 6. Gewindegang

- 34: Grat
- 36: Einkerbung

- d: Außendurchmesser eines Gewindeganges
- p: Abstand zwischen zwei Gewindegängen eines Gewindebandes
- α: Flankenwinkel eines Gewindeganges
- h: Höhe eine Gewindeganges

## Patentansprüche

1. Gewindeformende Verbundankerschraube (10) zum direkten Einschrauben in eine mit einer aushärtbaren Masse versehene Bohrung (12), die in einem festen Verankerungsgrund (13) eingebracht ist, wobei die Schraube (10) einen Schraubenkopf (14) mit einem Werkzeugangriff, einen im wesentlichen zylindrischen Schaft (16) und vorzugsweise eine kegelstumpfartig oder pyramidenstumpfartig verjüngte Spitze (18) aufweist, **dadurch gekennzeichnet, dass** die Schraube (10) zwei oder mehr, vorzugsweise drei Gewindebänder (20, 22, 24) aus jeweils zwei oder mehr, vorzugsweise zwei Gewindegängen (26 a, 26 b, 28a, 28b, 30a, 30b) aufweist, die parallel zueinander ausgebildet sind und sich helixförmig zumindest teilweise über die Länge des Schaftes (16) erstrecken.

2. Gewindeformende Verbundankerschraube (10) nach Anspruch 1, **dadurch gekennzeichnet, dass** jedes Gewindeband (20, 22, 24) die gleiche Anzahl von Gewindegängen (26 a, 26 b, 28a, 28b, 30a, 30b) aufweist.

3. Gewindeformende Verbundankerschraube (10) nach Anspruch 1 oder 2, **dadurch gekennzeichnet, dass** die Gewindegänge (26 a, 26 b, 28a, 28b, 30a, 30b) eines oder mehrerer Gewindebänder (20, 22, 24) einen unterschiedlich großen Außendurchmesser (d) oder vorzugsweise einen gleich großen Außendurchmesser (d) aufweisen.

4. Gewindeformende Verbundankerschraube (10) nach einem der Ansprüche 1 bis 3, **dadurch gekennzeichnet, dass** die Gewindegänge (26 a, 26 b, 28a, 28b, 30a, 30b) eines oder mehrerer Gewindebänder (20, 22, 24) einen unterschiedlich großen Flankenwinkel (α) oder vorzugsweise einen gleich großen Flankenwinkel (α) aufweisen.

5. Gewindeformende Verbundankerschraube (10) nach einem der Ansprüche 1 bis 4, **dadurch gekennzeichnet, dass** die Gewindebänder (20, 22, 24) die gleiche Steigung aufweisen.

6. Gewindeformende Verbundankerschraube (10) nach einem der Ansprüche 1 bis 5, **dadurch gekennzeichnet, dass** die Gewindebänder (20, 22, 24) gleichmäßig voneinander beabstandet an einer gemeinsamen Umfangslinie des Schaftes (16) starten.

7. Gewindeformende Verbundankerschraube (10) nach einem der Ansprüche 1 bis 6, **dadurch gekennzeichnet, dass** die Gewindegänge (26 a, 26 b, 28a, 28b, 15. Befestigunsanordnung nach Anspruch 12, **dadurch gekennzeichnet, dass** sich die Gewindegänge (26 a, 26 b, 28a, 28b, 30a, 30b) vollständig in die Wandung der Bohrung (12) eingraben und furchen.

8. Gewindeformende Verbundankerschraube (10) nach einem der Ansprüche 1 bis 7, **dadurch gekennzeichnet, dass** zwischen wenigstens zwei, vorzugsweise jeweils zwischen allen Gewindebändern (20, 22, 24) wenigstens eine Einkerbung (36) im Schaft (16) vorgesehen ist, die sich vorzugsweise parallel zu den Gewindebändern (20, 22, 24), unterbrochen oder vorzugsweise ununterbrochen helixförmig zumindest teilweise über die Länge des Schaftes (16) erstreckt.

9. Befestigungsanordnung in einem Verankerungsgrund (13), vorzugsweise aus Beton, mit einer gewindeformenden Verbundankerschraube (10) nach einem der Ansprüche 1 bis 8, wobei die Verbundankerschraube (10) in einem mit aushärtbarer Masse befüllten Bohrloch (12) im Verankerungsgrund (13) verankert ist, derart, dass ein Ringspalt zwischen Bohrlochwandung und der Verbundankerschraube (10) mit der aushärtbaren Masse vollständig befüllt ist, wobei die Gewindebänder (20, 22, 24) der Verbundankerschraube (10) vorzugsweise mit allen Gewindegängen, also vollständig, in den Verankerungsgrund (13) eingebettet sind oder wobei die Gewindebänder (20, 22, 24) der Verbundankerschraube (10) teilweise im Verankerungsgrund (13) und teilweise in der aushärtbaren Masse eingebettet sind.

10. Befestigungsanordnung nach Anspruch 9, **dadurch gekennzeichnet, dass** die aushärtbare Masse Mörtel oder ein chemisch härtender Klebstoff, vorzugsweise ein Epoxidharz-Klebstoff, ein Methylmethacrylat-Klebstoff oder ein Polyester-Klebstoff ist.

11. Befestigungsanordnung nach Anspruch 9 oder 10, **dadurch gekennzeichnet, dass** der Abstand zwischen Bohrlochwandung und dem Kerndurchmesser des eingeschraubten Schaftes (16) 0,1 bis 1 mm, vorzugsweise 0,3 bis 1 mm, besonders bevorzugt 0,7 bis 1 mm beträgt. 30a, 30b) jedes Gewindebandes (20, 22, 24) den gleichen Abstand (p) zueinander haben.

12. Befestigungsanordnung nach Anspruch 9, **dadurch gekennzeichnet, dass** die Außendurchmesser (d) der Gewindegänge (26 a, 26 b, 28a, 28b, 30a, 30b) derart bemessen sind, dass sich diese (26 a, 26 b, 28a, 28b, 30a, 30b) beim Einschrauben zumindest teilweise in die Wandung der Bohrung (12) eingraben und furchen.

13. Befestigungsanordnung nach Anspruch 12, **dadurch gekennzeichnet, dass** sich wenigstens 1/6 und höchstens 5/6 der Höhe (h) eines Gewindeganges (26 a, 26 b, 28a, 28b, 30a, 30b), gemessen im rechten Winkel ausgehend von der Oberfläche des Schaftes (16) bis zum Grat (34) des betreffenden Gewindeganges (26 a, 26 b, 28a, 28b, 30a, 30b), in die Wandung der Bohrung (12) eingraben und furchen.

14. Befestigungsanordnung nach Anspruch 12, **dadurch gekennzeichnet, dass** sich wenigstens die Spitzen der Gewindegänge (26 a, 26 b, 28a, 28b, 30a, 30b) in die Wandung der Bohrung (12) eingraben und furchen.

## Claims

1. Self-tapping composite anchor bolt (10) for screwing directly into a drill hole, which is provided with a hardened mass (12) and which is inserted in a fixed anchoring base (13), whereby the bolt (10) has a screw head (14) for the fixing of a tool, a basically cylindrical shaft (16) and preferably a truncated cone-like or truncated pyramid-like tapered point (18), **characterized by** the fact that the bolt (10) has two or more, preferably three, screw thread coils (20, 22, 24) of two or more, preferably two, turns of the thread (26a, 26b, 28a, 28b, 30a, 30b) in each case, which are formed in parallel with each other and which extend helix-shaped, at least partially, over the length of the shaft (16).

2. Self-tapping composite anchor bolt (10) in accordance with claim 1, **characterized by** the fact that each screw thread coil (20, 22, 24) has the same number of turns of the thread (26a, 26b, 28a, 28b, 30a, 30b).

3. Self-tapping composite anchor bolt (10) in accordance with claim 1 or 2, **characterized by** the fact that the turns of the thread (26a, 26b, 28a, 28b, 30a, 30b) of one or more screw thread coils (20, 22, 24) have a differently sized outside diameter (d) or preferably an outer diameter (d) of the same size.

4. Self-tapping composite anchor bolt (10) in accordance with one of the claims 1 to 3, **characterized by** the fact that the turns of the thread (26a, 26b, 28a, 28b, 30a, 30b) of one or more screw thread coils (20, 22, 24) have a differently sized flank angle (a) or preferably a flank angle of the same size (a).

5. Self-tapping composite anchor bolt (10) in accordance with one of the claims 1 to 4, **characterized by** the fact that the screw thread coils (20, 22, 24) have the same gradient.

6. Self-tapping composite anchor bolt (10) in accordance with one of the claims 1 to 5, **characterized by** the fact that the screw thread coils (20, 22, 24) start at an equal distance from each other on a common circumference line of the shaft (16).

7. Self-tapping composite anchor bolt (10) in accordance with one of the claims 1 to 6, **characterized by** the fact that the turns of the thread (26a, 26b, 28a, 28b, 30a, 30b) of every screw thread coil (20, 22, 24) have the same separation distance (p) from each other.

8. Self-tapping composite anchor bolt (10) in accordance with one of the claims 1 to 7, **characterized by** the fact that between at least two, and preferably between all, screw thread coils (20, 22, 24) in each case, at least one notch (36) is provided in the shaft (16), which extends preferably parallel to the screw thread coils (20, 22, 24), and partially or preferably consistently helix-shaped, at least in part over the length of the shaft (16).

9. Fastening arrangement in an anchoring base (13), preferably of concrete, with a self-tapping composite anchor bolt (10) in accordance with one of the claims 1 to 8, whereby the composite anchor bolt (10) is anchored in a drill hole (12), filled with a hardened mass, in the anchoring base (13), in such a way that a concentric gap between the drill hole wall and the composite anchor bolt (10) is filled completely with the hardened mass, whereby the screw thread coils (20, 22, 24) of the composite anchor bolt (10), are embedded preferably with all turns of the thread, in other words completely, in the anchoring base (13) or where the screw thread coils (20, 22, 24) of the composite anchor bolt (10) are embedded partially in the anchoring base (13) and partially in the hardened mass.

10. Fastening arrangement in accordance with claim 9, **characterized by** the fact that the hardened mass is mortar or a chemically-hardening adhesive, preferably an epoxy resin adhesive, a methyl-metha-acrylate adhesive or a polyester adhesive.

11. Fastening arrangement in accordance with claim 9 or 10, **characterized by** the fact that the separation distance between the drill hole wall and the core diameter of the screwed-in shaft (16) has a value 0.1 to 1 mm, preferably 0.3 to 1 mm, and in particular a preferred distance of 0.7 to 1 mm.

12. Fastening arrangement in accordance with claim 9, **characterized by** the fact that the outside diameter (d) of the turns of the thread (26a, 26b, 28a, 28b, 30a, 30b) are calculated in such a way that these (26a, 26b, 28a, 28b, 30a, 30b) dig into and groove the wall of the drill hole (12) at least partially when they are being screwed in.

13. Fastening arrangement in accordance with claim 12, **characterized by** the fact that at least 1/6 and at most 5/6 of the height (h) of a turn of the thread (26a, 26b, 28a, 28b, 30a, 30b), measured at a right angle starting from the surface of the shaft (16) up to the burr (34)
of the appropriate turn of the thread (26a, 26b, 28a, 28b, 30a, 30b), dig into and groove the wall of the drill hole (12).

14. Fastening arrangement in accordance with claim 12, **characterized by** the fact that at least the points of the turns of the thread (26a, 26b, 28a, 28b, 30a, 30b) dig into and groove the wall of the drill hole (12).

15. Fastening arrangement in accordance with claim 12, **characterized by** the fact that the turns of the thread (26a, 26b, 28a, 28b, 30a, 30b) dig into and groove the wall of the drill hole (12) completely.

## Revendications

1. Vis d'ancrage composite autotaraudeuse (10) destinée à être vissée directement dans un perçage (12) contenant une masse durcissable et étant creusé dans un substrat d'ancrage solide (13), la vis (10) présentant une tête de vis (14) munie d'une surface de prise pour outil, une tige (16) essentiellement cylindrique et, de préférence, une pointe amincie (18) tronconique ou en tronc de pyramide, **caractérisée en ce que** la vis (10) présente deux ou plus de deux, de préférence trois bandes de filetage (20, 22, 24) composées chacune de deux ou de plus de deux, de préférence de deux pas de vis (26a, 26b, 28a, 28b, 30a, 30b), conformées parallèlement entre elles et s'étendant en hélice au moins en partie sur la longueur de la tige (16).

2. Vis d'ancrage composite autotaraudeuse (10) conforme à la revendication 1, **caractérisée en ce que** chaque bande de filetage (20, 22, 24) présente le même nombre de pas de vis (26a, 26b, 28a, 28b, 30a, 30b).

3. Vis d'ancrage composite autotaraudeuse (10) conforme à la revendication 1 ou 2, **caractérisée en ce que** les pas de vis (26a, 26b, 28a, 28b, 30a, 30b) d'une ou de plusieurs bandes de filetage (20, 22, 24) possèdent un diamètre extérieur (d) de taille différente ou, de préférence, un diamètre extérieur (d) de taille identique.

4. Vis d'ancrage composite autotaraudeuse (10) conforme à l'une des revendications 1 à 3, **caractérisée en ce que** les pas de vis (26a, 26b, 28a, 28b, 30a, 30b) d'une ou de plusieurs bandes de filetage (20, 22, 24) présentent un angle de filet (α) de taille différente ou, de préférence, un angle de filet (α) de taille identique.

5. Vis d'ancrage composite autotaraudeuse (10) conforme à l'une des revendications 1 à 4, **caractérisée en ce que** les bandes de filetage (20, 22, 24) présentent le même pas.

6. Vis d'ancrage composite autotaraudeuse (10) conforme à l'une des revendications 1 à 6, **caractérisée en ce que** les bandes de filetage (20, 22, 24) démarrent sur une ligne circonférentielle commune de la tige (16) en étant positionnées suivant un écart constant les unes par rapport aux autres.

7. Vis d'ancrage composite autotaraudeuse (10) conforme à l'une des revendications 1 à 5, **caractérisée en ce que** les pas de vis (26a, 26b, 28a, 28b, 30a, 30b) de chaque bande de filetage (20, 22, 24) ont le même écartement (p) les uns par rapport aux autres.

8. Vis d'ancrage composite autotaraudeuse (10) conforme à l'une des revendications 1 à 7, **caractérisée en ce qu'**une gorge (36) au moins est prévue dans la tige (16) entre deux bandes de filetage au moins, de préférence entre toutes les bandes de filetage respectivement (20, 22, 24), cette gorge s'étendant de préférence parallèlement aux bandes de filetage (20, 22, 24), de manière interrompue ou, de préférence, ininterrompue en hélice au moins en partie sur la longueur de la tige (16).

9. Configuration de fixation dans un substrat d'ancrage (13), de préférence en béton, avec une vis d'ancrage composite autotaraudeuse (10) conforme à l'une des revendications 1 à 8, la vis d'ancrage composite (10) étant ancrée dans un perçage (12) rempli d'une masse durcissable situé dans le substrat d'ancrage (13), de telle sorte que l'interstice circulaire entre la paroi du perçage et la vis d'ancrage composite (10) est intégralement rempli par la masse durcissable ; à cette occasion, les bandes de filetage (20, 22, 24) de la vis d'ancrage composite (10) s'insèrent de préférence avec tous les pas de vis - c'est-à-dire intégralement - dans le substrat d'ancrage (13), ou bien les bandes de filetage (20, 22, 24) de la vis d'ancrage composite (10) s'insèrent en partie dans le substrat d'ancrage (13) et en partie dans la masse durcissable.

10. Configuration de fixation conforme à la revendication 9, **caractérisée en ce que** la masse durcissable est un mortier ou une matière adhésive à durcissement chimique, de préférence une colle à la résine époxy, une colle méthyl-méthacrylate ou une colle polyester.

11. Configuration de fixation conforme à la revendication 9 ou 10, **caractérisée en ce que** l'écartement entre la paroi du perçage et le diamètre du noyau de la tige vissée (16) est compris entre 0,1 et 1 mm, de préférence entre 0,3 et 1 mm et au mieux entre 0,7 et 1 mm.

12. Configuration de fixation conforme à la revendication 9, **caractérisée en ce que** les diamètres extérieurs (d) des pas de vis (26a, 26b, 28a, 28b, 30a, 30b) sont dimensionnés de telle sorte que lesdits pas de vis (26a, 26b, 28a, 28b, 30a, 30b) s'enfoncent et sillonnent tout au moins en partie la paroi du perçage (12) lors du vissage.

13. Configuration de fixation conforme à la revendication 12, **caractérisée en ce que** tout au moins 1/6 et tout au plus 5/6 de la hauteur (h) d'un pas de vis (26a, 26b, 28a, 28b, 30a, 30b) - mesurée en angle droit à partir de la surface de la tige (16) jusqu'à l'arête (34) du pas de vis (26a, 26b, 28a, 28b, 30a, 30b) concerné - s'enfoncent et sillonnent la paroi du perçage (12).

14. Configuration de fixation conforme à la revendication 12, **caractérisée en ce que** tout au moins les pointes des pas de vis (26a, 26b, 28a, 28b, 30a, 30b) s'enfoncent et sillonnent la paroi du perçage (12).

15. Configuration de fixation conforme à la revendication 12, **caractérisée en ce que** les pas de vis (26a, 26b, 28a, 28b, 30a, 30b) s'enfoncent intégralement et sillonnent la paroi du perçage (12).
